# FASCICULE DE BREVET EUROPEEN

(11) **EP 0 521 751 B1**
(45) Date de publication et mention de la délivrance du brevet: **15.11.1995**
(21) Numéro de dépôt: 92401743.7
(22) Date de dépôt: 22.06.1992
(51) Int. Cl.: H02G 15/113, H01R 9/05, H01R 13/658

(54) **Dispositif pour la réalisation de dérivations de câbles blindés**
Vorrichtung zur Herstellung von Abzweigungen von geschirmten Kabeln
Device for tapping screened cables

(30) Priorité: 03.07.1991 FR 9108320
(43) Date de publication de la demande: 07.01.1993
(73) Titulaire: LOGISTEL, F-30600 Vauvert (FR)
(72) Inventeur: Abat, Fernand, F-30600 Vauvert (FR)
(74) Mandataire: Faber, Jean-Paul

(56) Documents cités:
- EP-A- 0 040 941
- EP-A- 0 191 673
- DE-A- 1 490 308
- DE-U- 7 324 997

## Description

La présente invention vise un dispositif pour la réalisation de dérivations de câbles blindés.

On sait que pour de nombreuses machines, on utilise des câbles blindés afin de les protéger d'inductions parasites, le blindage devant s'étendre sur toute la longueur du câble, ce qui exclut de pouvoir effectuer des dérivations. On est donc obligé, lorsqu'on doit équiper plusieurs machines, de prévoir un câble blindé par machine ce qui est encombrant et peu pratique.

On a imaginé un dispositif pour la réalisation de câbles blindés (voir brevet allemand n° 1 490 308) qui comprend deux demi-coquilles avec des échancrures pour le passage des câbles blindés ceux-ci étant raccordés dans les demi-coquilles. Toutefois, une telle disposition ne donne pas entière satisfaction car elle ne permet pas une liaison intime entre le blindage des câbles et les demi-coquilles et ainsi n'évite pas les inductions parasites.

L'un des buts de la présente invention est de réaliser un dispositif simple qui permet de réaliser des dérivations de câbles blindés remédiant à l'inconvénient de la technique antérieure.

Le dispositif, selon l'invention, est destiné à permettre la réalisation de dérivations de câbles blindés comprenant un isolant dans lequel sont noyés des conducteurs électriques, une gaine isolante dans laquelle sont logés l'isolant et une tresse métallique, ledit dispositif comportant des bagues destinées à être serties à l'extrémité correspondante des câbles blindés sur la tresse préalablement dénudée et un boîtier métallique formé de deux demi-coquilles s'emboîtant l'une sur l'autre et comportant des échancrures complémentaires, ledit dispositif étant caractérisé en ce que le sertissage des bagues, sur les câbles blindés, est réalisé de manière à former une gorge, lesdites bagues étant logées dans les échancrures de manière que les gorges coopèrent avec ces dernières.

On réalise ainsi facilement des dérivations de câbles blindés, ces montages pouvant être réalisés directement à la fabrication ou par l'usager au moment du montage.

De préférence, le boîtier métallique est logé dans une enveloppe en matière plastique.

Suivant une variante de réalisation, l'enveloppe en matière plastique est formée de deux demi-enveloppes assemblables l'une sur l'autre.

De préférence, les bagues sont serties de manière à former un sertissage hexagonal avec une gorge ayant une section hexagonale, les échancrures complémentaires des demi-coquilles affectant une forme hexagonale correspondante. Ainsi, on a, d'une part, une très bonne tenue de la bague sur le câble blindé et, d'autre part, une bonne liaison entre la bague et le boîtier, le câble et la bague, une fois mis en place ayant une grande résistance à l'arrachement, ce qui offre une grande sécurité.

Enfin, suivant une caractéristique constructive, chaque demi-coquille affecte la forme d'un parallélépipède avec un fond et quatre parois latérales, les parois latérales de l'une des demi-coquilles étant prolongées par une jupe destinée à s'insérer entre les parois latérales de l'autre demi-coquille, les parois latérales de cette dernière comportant, sur sa surface interne, des emboutis, tandis que la jupe comporte des saillies destinées à s'insérer dans les emboutis.

L'invention va maintenant être décrite avec plus de détails en se référant à des modes de réalisation particuliers donnés à titre d'exemple seulement et représentés aux dessins annexés, dans lesquels :

Figure 1 est une vue en perspective montrant le montage d'une bague sur un câble blindé.

Figure 2 montre en perspective éclatée un dispositif, selon l'invention.

Figure 3 est une vue en perspective de l'ensemble monté.

Figure 4 est une vue en coupe suivant la ligne 4-4 de la figure 3;

Figure 5 montre en perspective une coquille de matière plastique utilisable sur un boîtier.

Figure 6 montre en perspective une variante de réalisation.

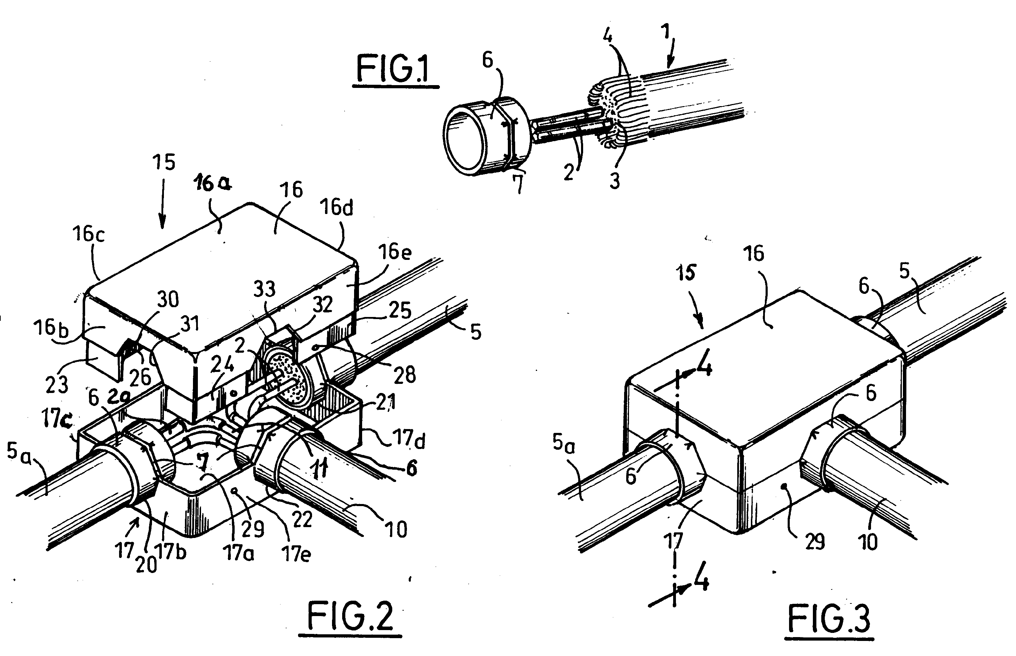

A la figure 1, on a représenté un câble blindé 1 comportant des conducteurs 2 noyés dans un isolant 3 logé dans une tresse métallique tubulaire 4 elle-même logée dans une gaîne isolante 5.

L'extrémité libre du câble 1 est dénudée de manière à mettre à jour les conducteurs 2 et, la tresse 4 est rabattue contre la surface externe de la gaîne 5. L'extrémité, ainsi préparée, est engagée dans une bague 6 cylindrique ayant une dimension correspondante.

En un point intermédiaire médian de la longueur de la bague 6, il est pratiqué un sertissage 7 de manière à assurer, d'une part, une fixation résistant à la bague 6 sur le câble et, d'autre part, une bonne liaison entre la tresse 4 et ladite bague 6. Ce sertissage est pratiqué de manière à former une sorte de gorge à section hexagonale.

Comme on le voit à la figure 2, on monte de la même façon que ci-dessus exposé sur un câble 10, une bague 6. La câble blindé 10 comporte quatre conducteurs 11 dont deux sont destinés à être reliés aux conducteurs 2 d'un câble 5 et les deux autres aux conducteurs 2a d'un câble 5a, la liaison s'effectuant, par exemple, par des manchons sertis ou soudés sur lesdits conducteurs.

Le dispositif est complété par un boîtier désigné par la référence 15 et formé de deux demi-coquilles métalliques 16 et 17.

La demi-coquille 16 a une forme générale parallélépipédique avec un fond 16a et quatre parois latérales 16b, 16c, 16d et 16e.

Le demi-coquille 17 a une forme correspondante à la demi-coquille 16 et présente un fond 17a et quatre parois latérales 17b, 17c, 17d et 17e.

Les parois 17b, 17d et 17e présentent respectivement des échancrures 20, 21 et 22, ces échancrures ayant une section correspondant à la moitié de la section des manchons 6 au droit du sertissage.

Les parois latérales 16b, 16c, 16d et 16e de la demi-coquille 16 sont prolongées par des jupes respectivement 23, 26, 25 et 24 présentant une hauteur correspondant à celle des parois latérales 17b, 17c, 17d et 17e et ayant des dimensions permettant de s'insérer dans la demi-coquille 17, lesdites jupes étant raccordées aux parois correspondantes par un épaulement de manière, lorsque les demi-coquilles sont assemblées que les parois latérales soient alignées.

Les jupes 25 et 26 comportent des saillies 28 tandis que la surface interne des parois latérales 16b et 16e comportent des emboutis correspondants 29.

La jupe 23 présente une fente s'ouvrant sur une échancrure complémentaire 31 de l'échancrure 20, la jupe 24 étant pourvue d'une fente 32 débouchant sur une échancrure 33 complémentaire de l'échancrure 22, la jupe 25 et la paroi 16d étant percées d'une fente et d'une échancrure, non visible, sur la figure 2, et correspondant à l'échancrure 21.

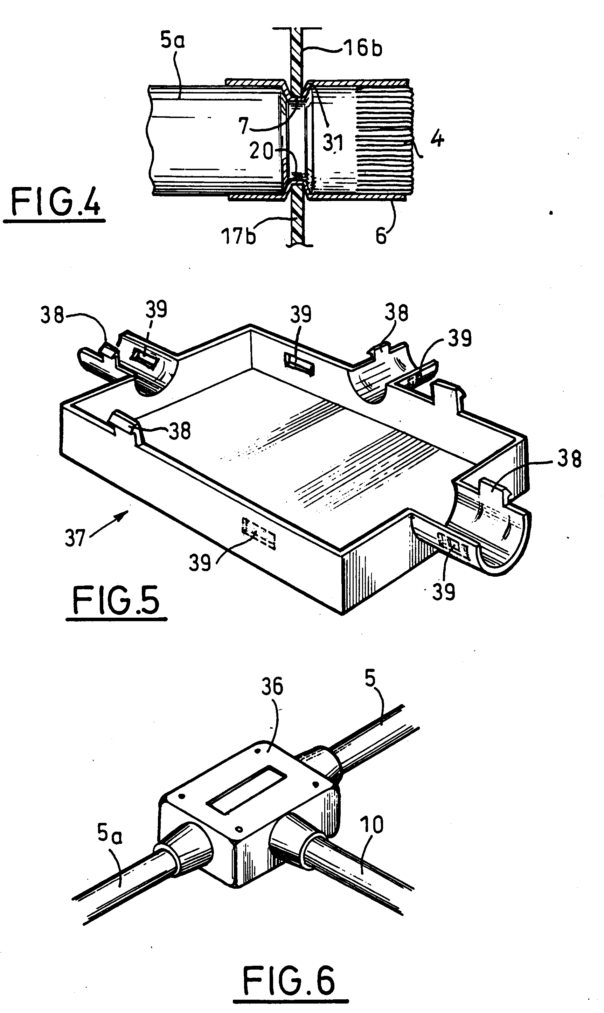

Comme on le voit aux figures 3 et 4, les demi-coquilles 16 et 17 s'emboîtent l'une sur l'autre, les saillies 28 s'insérent dans les emboutis correspondants 29, et les sertissages 7 sont pincés dans les échancrures correspondantes.

On peut compléter le dispositif en surmoulant une enveloppe en matière plastique 36 (voir figure 6).

On peut également loger le boîtier 15 dans deux demi-enveloppes de matière plastique 37 (voir figure 5) comportant, d'une part, des crochets d'assemblage 38 et, d'autre part, des épaulements 39 disposés de manière que deux demi-enveloppes identiques puissent être assemblées l'une tournée sens dessus dessous par rapport à l'autre en enfermant un boîtier 15.

## Revendications

1. Dispositif pour la réalisation de dérivations de câbles blindés, lesdits câbles blindés comprenant un isolant (3) dans lequel sont noyés des conducteurs électriques, une gaine isolante (5) dans laquelle sont logés l'isolant et une tresse métallique (4), ledit dispositif comportant des bagues (6) destinées à être serties à l'extrémité correspondante des câbles blindés sur la tresse (4) préalablement dénudée et un boîtier métallique (15) formé de deux demi-coquilles (16, 17) s'emboîtant l'une sur l'autre, ces demi-coquilles comportant des échancrures complémentaires, caractérisé en ce que le sertissage des bagues (6), sur les câbles blindés, est réalisé de manière à former une gorge, lesdites bagues (6) étant logées dans les échancrures de manière que les gorges coopèrent avec ces dernières.

2. Dispositif pour la réalisation de dérivations de câbles blindés, selon la revendication 1, caractérisé en ce que le boîtier métallique est logé dans une enveloppe en matière plastique (37).

3. Dispositif pour la réalisation de dérivations de câbles blindés, selon la revendication 2, caractérisé en ce que l'enveloppe en matière plastique est formée de deux demi-enveloppes assemblables l'une sur l'autre.

4. Dispositif pour la réalisation de dérivations de câbles blindés, selon la revendication 1, caractérisé en ce que les bagues (6) sont serties de manière à former un sertissage (7) hexagonal avec une gorge ayant une section hexagonale, les échancrures complémentaires des demi-coquilles (16, 17) affectant une forme hexagonale correspondante.

5. Dispositif pour la réalisation de dérivations de câbles blindés, selon la revendication 1, caractérisé en ce que chaque demi-coquille (16, 17) affecte la forme d'un parallélépipède avec un fond (16a, 17a) et quatre parois latérales (16b, 16c, 16d et 16e) (17b, 17c, 17d et 17e), les parois latérales de l'une des demi-coquilles étant prolongées par une jupe (23, 24, 25 et 26) destinée à s'insérer entre les parois latérales de l'autre demi-coquille, les parois latérales de cette dernière comportant, sur sa surface interne, des emboutis (29), tandis que la jupe comporte des saillies (28) destinées à s'insérer dans les emboutis (29).

## Patentansprüche

1. Vorrichtung zur Herstellung von Abzweigungen von geschirmten Kabeln, wobei die genannten geschirmten Kabel eine Isolation (3), in der elektrische Leiter eingebettet sind, und einen isolierenden Mantel (5) aufweisen, in dem sich die Isolation und ein metallisches Geflecht (4) befinden, wobei besagte Vorrichtung Ringkörper (6), die dazu bestimmt sind, am betreffenden Ende der geschirmten Kabel auf dem zuvor freigelegten Geflecht (4) durch Quetschverbindung festgelegt zu werden, sowie ein metallisches Gehäuse (15) aufweist, das aus zwei Halbschalen (16, 17) gebildet ist, die ineinandergreifend zusammenpassen, wobei die Halbschalen komplementäre Ausschnitte aufweisen, dadurch gekennzeichnet, daß die Quetschverbindung der Ringkörper (6) auf den geschirmten Kabeln unter Ausbildung einer Rille ausgeführt ist, wobei die genannten Ringkörper (6) in den Ausschnitten derart angeordnet sind, daß die Rillen mit den letzteren zusammenwirken.

2. Vorrichtung zur Herstellung von Abzweigungen von geschirmten Kabeln nach Anspruch 1, dadurch gekennzeichnet, daß das metallische Gehäuse in einer Hülle (37) aus Kunststoffwerkstoff angeordnet ist.

3. Vorrichtung zur Herstellung von Abzweigungen von geschirmten Kabeln nach Anspruch 2, dadurch gekennzeichnet, daß die Hülle aus Kunststoffwerkstoff aus zwei Gehäusehälften gebildet ist, die miteinander verbindbar sind.

4. Vorrichtung zur Herstellung von Abzweigungen von geschirmten Kabeln nach Anspruch 1, dadurch gekennzeichnet, daß die Ringkörper (6) in der Weise festgelegt sind, daß eine sechseckförmige Einkerbung (7) mit einer Rille, welche einen sechseckförmigen Querschnitt aufweist, ausgebildet ist, wobei die komplementären Auschnitte der Halbschalen (16, 17) eine entsprechende sechseckförmige Formgebung besitzen.

5. Vorrichtung zur Herstellung von Abzweigungen von geschirmten Kabeln nach Anspruch 1, dadurch gekennzeichnet, daß jede Halbschale (16, 17) die Form eines Parallelflachs mit einem Boden (16a, 17a) und vier Seitenwänden (16b, 16c, 16d und 16e) (17b, 17c, 17d und 17e) aufweist, wobei die Seitenwände einer der Halbschalen durch Schürzen (23, 24, 25 und 26) verlängert sind, die zum Einsetzen zwischen die Seitenwände der anderen Halbschale bestimmt sind, und die Seitenwände der letztgenannten auf ihrer Innenfläche Vertiefungen (29) aufweisen, während die Schürzen Vorsprünge (28) besitzen, die dazu bestimmt sind, in die Vertiefungen (29) einzugreifen.

## Claims

1. A device for realizing tappings from screened cables, the said
screened cables comprising an insulator (3) in which electrical conductors are embedded and an insulating sheath (5) in which the insulator and a metallic braid (4) are lodged, the said device including rings (6) which are intended for being crimped at the corresponding end of the screened cables onto the braid (4) which has first been bared, and a metallic casing (15) formed of two half-shells (16, 17) which fit into one another, these half-shells having complementary grooves, characterised in that the crimping of the rings (6) onto the screened cables is realized so as to form a neck, the said rings (6) being lodged in the grooves so that the necks cooperate with the latter.

2. A device as in Claim 1 for realizing tappings from screened cables,
characterized in that the metallic casing is lodged in an envelope of plastics matter (37).

3. A device as in Claim 2 for realizing tappings from screened cables,
characterized in that the envelope of plastics matter is formed of two half-envelopes which may be assembled with one another.

4. A device as in Claim 1 for realizing tappings from screened cables,
characterized in that the rings (6) are crimped so as to form a hexagonal crimping (7) with a neck having a hexagonal section, with the complementary grooves in the half-shells (16, 17) assuming a corresponding hexagonal shape.

5. A device as in Claim 1 for realizing tappings from screened cables,
characterized in that each half-shell (16, 17) assumes the shape of a parallelepiped with a bottom (16a, 17a) and four sidewalls (16b, 16c, 16d and 16e) (17b, 17c, 17d and 17e), the sidewalls of one of the half-shells being prolonged by a skirt (23, 24, 25 and 26) which is intended for being inserted between the sidewalls of the other half-shell, the sidewalls of the latter having on their inner surfaces stampings (29), whilst the skirt has projections (28) intended for being inserted into the stampings (29).
